# EUROPÄISCHE PATENTSCHRIFT

(11) **EP 3 338 001 B1**
(45) Veröffentlichungstag und Bekanntmachung des Hinweises auf die Patenterteilung: **02.06.2021**
(21) Anmeldenummer: 16757587.7
(22) Anmeldetag: 15.08.2016
(51) Int. Cl.: F16D 66/02, B60T 17/08

(54) **VERFAHREN ZUR ZUSTANDSÜBERWACHUNG EINER BETRIEBSBREMSE**
METHOD FOR MONITORING THE CONDITION OF A SERVICE BRAKE
PROCÉDÉ SERVANT À SURVEILLER L'ÉTAT D'UN FREIN DE SERVICE

(30) Priorität: 17.08.2015 DE 102015113587
(43) Veröffentlichungstag der Anmeldung: 27.06.2018
(73) Patentinhaber: KNORR-BREMSE Systeme für Nutzfahrzeuge GmbH, 80809 München (DE)
(72) Erfinder: HECKER, Falk, 71706 Markgröningen (DE); THEIL, Robert, 82299 Türkenfeld (DE); WERTH, Alexander, 80999 München (DE)
(86) Internationale Anmeldenummer: PCT/EP2016/069327
(87) Internationale Veröffentlichungsnummer: WO 2017/029256

(56) Entgegenhaltungen:
- EP-A1- 2 479 450
- WO-A1-2015/014450

## Beschreibung

Die Erfindung betrifft ein zum Betreiben eines Bremssystems eines Fahrzeugs.

Pneumatisch betätigte Scheibenbremsen weisen in der Regel einen Verschleiß an den Bremsbelägen auf, welcher mit einem Belagverschleißsensor unterschiedlicher Bauart sensiert werden kann. Bauartbedingt kann es nach einer Betätigung einer Bremse zu einem zu geringen Rückstellen der Bremsbeläge von der Scheibe kommen, sodass ein zu geringes oder kein Lüftspiel eingestellt wird.

Die DE 10 2006 002 307 A1 offenbart ein Verfahren zum Anzeigen von Verschleiß zumindest eines Bremsbelags bei einer Scheibenbremse mit elektromotorischem Aktor.

Die gattungsgemäße DE 10 2013 012 104 A1 beschreibt ein Verfahren zum Ermitteln eines Lüftspiels einer Fahrzeugbremse und Fahrzeugbremse mit einer Vorrichtung zur Ermittlung eines Lüftspiels. Die Fahrzeugbremse weist eine Zuspannvorrichtung, eine Verschleißnachstellvorrichtung, eine Sensoreinrichtung zur Erfassung eines Betätigungshubs der Zuspannvorrichtung und ein Fahrzeugsteuerungssystem auf. Das entsprechende Verfahren umfasst die Verfahrensschritte des Aufnehmen eines Messsignals des Betätigungshubs, welches von der Sensoreinrichtung bereitgestellt wird, innerhalb eines vorher festlegbaren Zeitfensters während eines Bremsvorgangs und Speichern des Messsignals als Datenpaare Betätigungshub-Zeit während eines Bremsvorgangs; Bilden einer zeitlichen Ableitung des Messsignals in dem Zeitfenster mit einem geeigneten Algorithmus zur Bestimmung eines Zeitpunkts bei einem Maximum; und Ermitteln des Lüftspiels anhand des so bestimmten Zeitpunkts und Weiterleiten des so ermittelten Wertes des Lüftspiels an das Fahrzeugsteuerungssystem. Eine Fahrzeugbremse ist mit einer Vorrichtung zur Ermittlung eines Lüftspiels zur Durchführung des Verfahrens ausgerüstet.

Aufgrund der ständig wachsenden Anforderungen, Kosten zu reduzieren, wobei gleichzeitig Qualität und Nutzen nicht nur beibehalten sondern erhöht werden sollen und außerdem Wartungskosten zu verringern sind, ergibt sich ein dementsprechender Bedarf für ein verbessertes Verfahren zum Ermitteln eines Lüftspiels und des Belagverschleißes einer Fahrzeugbremse. Ein Lüftspiel kann durch unterschiedliche Störeinflüsse über der Laufzeit verändert werden.

Aus der WO 2015/014450 A1 sind ein Verfahren und eine Vorrichtung zur Zustandsüberwachung einer Betriebsbremse für ein Nutzfahrzeug bekannt, mit je Betriebsbremse einer linearen Wegerfassungseinrichtung, bei der nach dem Einlesen eines Positionssignals mit der Wegerfassungseinrichtung und Auswerten des Positionssignals zur Ermittlung zumindest eines Zustandsparameter der Betriebsbremse ein Bereitstellen des Zustandsparameters der Betriebsbremse an einer Schnittstelle erfolgt.

Aus der EP 2 479 450 A1 ist ein Verfahren und eine entsprechende Anordnung zum Rejustieren beidseitigen Lüftspiels bei Schiebesattelscheibenbremsen bekannt.

Daher besteht die Aufgabe der vorliegenden Erfindung darin, ein verbessertes Verfahren zum Betreiben der Fahrzeugbremse bereitzustellen.

Diese Aufgabe wird durch die Merkmale des Anspruchs 1 gelöst.

Sie machen es einzeln und in Kombination möglich, die Lebensdauer oder Standzeit einer Fahrzeugbremse weiter zu verlängern und weiter den Verschleiß mehrerer Fahrzeugbremsen zu harmonisieren, um Serviceintervalle optimal nutzen zu können.

So schafft die Erfindung ein Verfahren zum Betreiben eines Bremssystems eines Fahrzeugs nach Anspruch 1.

Ein Verfahren zum Betreiben eines Bremssystems eines Fahrzeugs, insbesondere eines Nutzfahrzeugs umfasst die folgenden Schritte, wobei das Bremssystem zumindest eine Betriebsbremse und eine Vorrichtung zur Zustandsüberwachung der Betriebsbremse umfasst:
a) Einlesen eines ermittelten Zustandsparameters der Betriebsbremse von einer Schnittstelle der Vorrichtung (100) zur Zustandsüberwachung der Betriebsbremse;
b) Auswerten des Zustandsparameters, um ein Bremsansteuerungssignal unter Verwendung des ausgewerteten Zustandsparameters und eines Bremsanforderungssignals zu ermitteln, um eine Bremsbereitschaft und ergänzend oder alternativ einen gewünschten Zustand der Betriebsbremse einzustellen; und
c) Bereitstellen des Bremsansteuerungssignals der Betriebsbremse an einer Schnittstelle, um die Betriebsbremse anzusteuern.

Vor dem Schritt des Einlesens wird zumindest ein Randparameter überprüft werden. Die weiteren Schritte des Verfahrens können nur ausgeführt werden, wenn der zumindest eine Randparameter innerhalb eines vorgegebenen Sollbereichs liegt.

Im Schritt des Auswertens kann das Bremsansteuerungssignal derart ermittelt werden, dass eine Mehrzahl von angesteuerten Betriebsbremsen des Fahrtzeugs einen harmonisierten Verschleiß aufweisen. Als Randparameter kann beispielsweise die Art einer Bremsung, die Höhe der Verzögerung, der Bremsdruck oder ein anderer Randparameter definiert werden.

So ist aus dem Einlesen der Informationen ersichtlich wie groß der Differenz-Druck zwischen Betätigen und Lösen der Bremse ist. Hierdurch kann, entgegen einer konventionellen Regelung (ohne Erfassung der Zustandsparameter einer Bremse) bei dem verringern der Bremsanforderung, der Anforderungsdruck um den aktuell ermittelten Betrag reduziert werden. Die Reaktion in der Betätigung, kann daraufhin durch den Sensor direkt überprüft und nachgeregelt werden. Aus den ermittelten und gespeicherten Druck-Weg-Verläufen ist es möglich jederzeit dem Bremssystem die Druckwerte zu liefern welche zum Zuspannen oder Lösen gerade benötigt werden.

So können die Bremsen eines Bremssystem entsprechend der Zustandsinformation bzw. des Zustandsparameters der entsprechenden Bremse optimiert angesprochen oder angesteuert werden.

Das Ermitteln des Zustandsparamters erfolgt dabei in folgenden Teilschritten:
aa) Einlesen eines Positionssignals, wobei das Positionssignal eine durch die lineare Wegerfassungseinrichtung erfasste Position einer Komponente der Betriebsbremse repräsentiert, insbesondere eine Position über die Zeit oder einen Zeitverlauf repräsentiert; wobei zusätzlich im Schritt des Einlesens ein Drucksignal und ergänzend oder alternativ ein Steuersignal und ergänzend oder alternativ ein Belagverschleißsignal eingelesen wird,
bb) Auswerten des Positionssignals, um zumindest einen Zustandsparameter der Betriebsbremse zu ermitteln; wobei im Schritt des Auswertens der Zustandsparameter unter Verwendung des Drucksignals und ergänzend oder alternativ des Steuersignals und ergänzend oder alternativ des Belagverschleißsignals bestimmt wird; und
cc) Bereitstellen des Zustandsparameters der Betriebsbremse an einer Schnittstelle.

Im Schritt des Auswertens wird in diesem Fall der Zustandsparameter anders als im gattungsgemäßen Stand der Technik ergänzend unter Verwendung des Drucksignals und ergänzend oder alternativ des Steuersignals und ergänzend oder alternativ des Belagverschleißsignals bestimmt. So kann die Auswertung verbessert werden.

Unter einem Fahrzeug kann ein Nutzfahrzeug oder ein Anhänger oder Auflieger für ein Nutzfahrzeug verstanden werden. Ein Nutzfahrzeug (NFZ) kann auch als Nutzkraftwagen oder Kraftfahrzeug, das nach seiner Bauart und Einrichtung zum Transport von Personen oder Gütern bestimmt ist, oder zum Ziehen von Anhängern, bezeichnet werden, wie beispielsweise ein Omnibus, Lastkraftwagen, Sattelschlepper, Zugmaschine oder Kranwagen. Unter einer Wegerfassungseinrichtung kann ein Sensor verstanden werden. Die Wegerfassungseinrichtung kann als eine lineare Wegerfassungseinrichtung ausgebildet sein. Dabei können unterschiedliche Messverfahren wie optische, mechanische, elektrische, oder magnet-elektrische Messverfahren verwendet werden. Unter dem Positionssignal kann ein elektrisches Signal, sowohl als analoges als auch ein digitales Signal verstanden werden. Das Positionssignal kann eine relative Position von zwei Komponenten der Bremse repräsentieren.

Im Schritt des Einlesens wird ein Drucksignal und ergänzend oder alternativ ein Steuersignal und ergänzend oder alternativ ein Belagverschleißsignal eingelesen. Im Schritt des Auswertens kann in diesem Fall der Zustandsparameter unter Verwendung des Drucksignals und ergänzend oder alternativ des Steuersignals und ergänzend oder alternativ des Belagverschleißsignals bestimmt werden. So kann die Auswertung verbessert werden.

Vorteilhaft ist, wenn im Schritt des Bereitstellens eine Regelgröße anstelle des Zustandsparameters oder zusätzlich zum Zustandsparameter bereitgestellt wird. Die Regelgröße kann unter Verwendung des Zustandsparameters bestimmt werden. Die Regelgröße kann als ein Regelsignal bereitgestellt werden. Der Zustandsparameter kann ein Lüftspiel, einen Belagverschleiß oder einen Fehler oder eine Fehlerart der Bremse repräsentieren. Dabei kann unter dem Zustandsparameter auch eine Mehrzahl von Parametern oder Zustandsinformationen verstanden werden. Vorteilhaft kann dadurch ein Zustand der Bremse diagnostiziert werden.

Die Regelgröße kann dabei ein Steuersignal für einen Ansprechdruck und ergänzend oder alternativ einen Anlegedruck für eine Reibeinrichtung der Betriebsbremse repräsentieren. So kann über den Zustandsparameter und die daraus abgeleitete Regelgröße ein Zustand der Bremse verändert werden, insbesondere in einem geschlossenen Regelkreis.

In einer Ausführungsform kann die Regelgröße ein Signal zum Ansteuern eines Aktors der Betriebsbremse repräsentieren. Dabei kann der Aktor ein bidirektionaler Nachsteller, insbesondere ein elektrischer Nachsteller, und ergänzend oder alternativ ein Bremszylinder und ergänzend oder alternativ eine Zusatzkomponente des Bremszylinders der Betriebsbremse sein. Unter einem Aktor kann ein Stellglied oder ein Aktuator verstanden werden. Vorteilhaft kann somit ein Zustand der Betriebsbremse aktiv verändert werden. Beispielsweise kann ein zu großes Lüftspiel verringert oder ein zu kleines Lüftspiel vergrößert werden. Somit kann sowohl der Bremsweg verkürzt werden (im Vergleich zu einem zu großen Lüftspiel) als auch ein Heißlaufen der Bremse erkannt und verhindert werden (im Vergleich zu einem zu kleinen oder nicht vorhandenen Lüftspiels).

Im Schritt des Auswertens kann der Zustandsparameter eine Information über einen Belagverschleiß und ergänzend oder alternativ ein Belagwachsen und ergänzend oder alternativ ein Lüftspiel und ergänzend oder alternativ eine Bremsbereitschaft und ergänzend oder alternativ eine Fehlerinformation der Betriebsbremse repräsentieren. So kann einem Fahrer oder einem Steuergerät eine Information über den Zustand der Betriebsbremse bereitgestellt werden. Alternativ kann eine Vorrichtung innerhalb der Betriebsbremse die Information verarbeiten und so den Zustand der Betriebsbremse optimieren auf eine längere Lebensdauer und eine verbesserte Bremsbereitschaft.

Vorteilhaft kann es sein, im Schritt des Einlesens das Belagverschleißsignal durch das Positionssignal zu plausibilisieren. So kann eine robustere Information über den Belagverschleiß bereitgestellt werden.

Bei einer Bremse mit vorhandenen Sensoren kann das Ansprechen der mechanischen Bauteile an der Veränderung der gemessenen Signale erkannt werden. Dadurch ist es der Bremsregelung möglich, Ansprechdruck jeder einzelnen Bremse zu kennen und die Druckanforderung dahingehend anzupassen, bei welchem Druck die Bauteile der Bremse in Bewegung versetzt werden. Hierdurch kann eine Regelung der Bremsbetätigung erfolgen, ohne dass die Polrad-Messungen herangezogen werden muss. Dies reduziert den Luftverbrauch und verbessert die Ansprechzeit im ABS/EBS-Regelfall.

Ein anderer Anwendungsfall ist das Vorbereiten einer Bremse vor einer Bremsbetätigung. Hierbei wird der Druck bei jeder Bremse eingebracht, bis eine gewisse Stellung der Bremsmechanik erreicht ist. Zum Beispiel bis zu einem Anliegen der Beläge (ohne Verzögerung), oder bies zu einem Lüftspiel minimal, oder z.B. Lüftspiel 0,4 mm. Die jeweilige Stellung wird von der Sensorik erkannt und das Bremssystem kann den Druckaufbau anhand des anstehenden Abstandes der Betätigungseinrichtung erkennen.

So können alle Bremsen eines Fahrzeuges in Bremsbereitschaft gebracht werden und unabhängig von ihrem Zustand der einzelnen Bremse (z.B. unterscheidliches Lüftspiel oder unterschiedlicher Belagverschleiss an verschiedenen Rädern) zeitgleich ansprechen und somit eine bessere Verzögerung des Gesamtfahrzeuges erreicht werden.

Bremsbereitschaft kann auch durch Fahrerassistenz-Systeme angefordert werden, wie beispielsweise Abstandsradar, Verkehrsinformationssysteme, Car2Car-Kommunikation, Vekehrsleitsysteme. Hierbei ist ein Betrieb der Bremsen in prozesssicheren Parametern möglich, da die Informationen aus dem Linearsensor zur Verfügung stehen. Somit kann das Lüftspiel situativ auf das sichere Minimum eingestellt werden und bei Bedarf reduziert und auch vergrößert werden, wenn geeignete Aktuatoren verwendet werden.

Weiterhin ist es auch möglich, abhängig von verschiedenen Zustandsparametern der Bremsen im Fahrzeug eine dynamische Voreilung des Bremssignales einzustellen, um auf unterschiedliche Leitungslängen, bzw. unterschiedliche Lüftspiele, Verschleisszustände und Bremsensteifigkeiten zu reagieren.

Eine weitere vorteilhafte Anwendung ist gegeben, wenn wie zum Beispiel bei Anhänger-Fahrzeugen nur ein Druckmodulator für mehrere Bremsen zur Verfügung steht.

Hier ist es üblich im Druckmodulator einen fixen Druck einzustellen, bei dem die Bremsen angesprochen werden. Dadurch können die verschiedenen Achsen zeitverzögert betätigt werden. Liegen allerdings die Zustandsparameter -'von Sensoren detektiert - in der Bremse vor, können zusammen mit Aktuatoren die Ansprechzeiten so variiert werden, dass z.B. der unterschiedliche Verschleiß von verschiedenen Rädern berücksichtigt und im Rahmen fahrstabiler Parameter ausgeglichen wird, indem die Voreilung dynamisch durch Veränderung des Lüftspiel angepasst wird.

Aus den Veränderungen der Zustandsparameter der Bremse über den Gebrauch können Fehlerzustände wie zu hohe Wirkverluste in der Betätigung (Hysterese) erkannt werden.

Hierdurch kann beispielsweise vorteilhaft auf ein Versagen von Bauteilen zurückgeschlossen werden. Beispielhaft führt eine plastische Deformation des Drehhebels zu einer Schwergängigkeit des Betätigungssystems, die von Sensoren durch Veränderung der charakteristischen Linie ablesbar ist (siehe Figuren). Ebenso kann ein Versagen von Lagerstellen der Mechanik an Hebellagerung, Brückenabstützung, usw. erkannt werden. Ebenso kann eine Fehlfunktion an der Belagführung oder Sattelführung erkannt werden.

Durch den Verlauf der ermittelten Sensorlinie nach dem Anliegen der Beläge ist es möglich, die Steifigkeit der Bremse zu ermitteln.

Die Steifigkeit des Systems ergibt sich aus Steifigkeit der Zuspanneinheit und Steifigkeit der Beläge. Die Steifigkeit der Beläge verändert sich in Abhängigkeit mit der Restbelagstärke. Auch hier kann auf die dynamische Veränderung der Zustandswerte der Bremse über die Betriebszeit reagiert werden, so dass schneller geregelt werden kann und dabei weniger Luft dafür verbraucht wird.

Ein mechanisches Versagen der Zuspanneinheit, z.B.: ein Bruch im Bremssattel ist durch drastisch veränderten Verlauf der Druck-Weg-Abhängigkeit zu erkennen.

Solche Fehlerzustände können zu Klemmen führen und Fehlfunktionen der Bremse oder zu unzureichender Bremswirkung führen.

Fehlerzustände können im Fahrerhaus an den Bordwerkzeugen angezeigt werden, in der Regeleinheit gespeichert und im Service ausgelesen werden, oder durch Telekommunikationseinrichtungen auf Smartphone angezeigt oder an Fuhrunternehmer oder Flottenverwaltungseinrichtungen übertragen werden.

Günstigstenfalls kann ein Betrieb einer fehlerhaften Bremse vom Bremssystem reduziert und vermieden werden, wenn dies der aktuelle Fahrzustand zulässt. Beispielsweise kann bei einer Anpassungsbremsung im niedrig Druckbereich auf das Betätigen einer klemmenden Bremse verzichtet werden. Bei Notbremsungen wird der Fehlerzustand übergangen und alle Bremsen mit voller Bremsanforderung beaufschlagt.

Bei einem Bremssystem mit derartig ausgestatten Bremsen, Sensoren und Verfahren zu deren Auswertung ist es möglich, aus einer Anzahl an Betätigungen, den Bremsdrücken und dem Betätigungshub eine/die aktuelle Schädigung der Bremse zu errechnen und/oder die zu erwartende Lebensdauer der Bremse oder Erwartungswerte für die zukünftige Standzeit der Bremse zu bestimmen.

Eine Vorrichtung zur Zustandsüberwachung einer Betriebsbremse eines Fahrzeugs, insbesondere eines Nutzfahrzeugs, weist Einrichtungen auf, die ausgebildet sind, die Schritte eines Verfahrens zur Zustandsüberwachung einer Bremse auszuführen und ergänzend oder alternativ umzusetzen:
a) eine Schnittstelle zum Einlesen eines Positionssignals, wobei das Positionssignal eine durch die lineare Wegerfassungseinrichtung erfasste Position einer Komponente der Betriebsbremse repräsentiert;
b) eine Einrichtung zum Auswerten des Positionssignals, um zumindest einen Zustandsparameter der Betriebsbremse zu ermitteln;
c) eine Einrichtung zum Bereitstellen des Zustandsparameters der Betriebsbremse an einer Schnittstelle.

Eine Vorrichtung zum Betreiben eines Bremssystems eines Fahrzeugs, insbesondere eines Nutzfahrzeugs, weist die folgenden Einrichtungen auf, wobei das Bremssystem zumindest eine Betriebsbremse und eine vorstehende Vorrichtung zur Zustandsüberwachung der Betriebsbremse umfasst:
a) eine Schnittstelle zum Einlesen eines Zustandsparameters der Betriebsbremse von einer Schnittstelle der Vorrichtung zur Zustandsüberwachung der Betriebsbremse;
b) eine Einrichtung zum Auswerten des Zustandsparameters, um ein Bremsansteuerungssignal unter Verwendung des ausgewerteten Zustandsparameters und eines Bremsanforderungssignals zu ermitteln, um eine Bremsbereitschaft und ergänzend oder alternativ einen gewünschten Zustand der Betriebsbremse einzustellen; und
c) eine Schnittstelle zum Bereitstellen des Bremsansteuerungssignals, um die Betriebsbremse anzusteuern.

Eine Wegerfassungseinrichtung für eine Betriebsbremse eines Fahrzeugs, insbesondere eine lineare Wegerfassungseinrichtung, ist ausgebildet, ein Positionssignal bereitzustellen, wobei das Positionssignal eine durch die, insbesondere lineare, Wegerfassungseinrichtung erfasste Position einer Komponente der Betriebsbremse repräsentiert, insbesondere eine Position über die Zeit oder einen Zeitverlauf repräsentiert. Dabei kann eine sich bewegende Komponente der Betriebsbremse mit optischen Markierungen versehen sein, die von einem Laser oder einer LED abgetastet und dessen Reflexion von einer entsprechenden Fotodiode ausgewertet wird. Alternativ kann die Wegerfassungseinrichtung beispielsweise nach dem Dopplerprinzip arbeiten. Eine Variante der Wegerfassungseinrichtung kann eine Widerstandsänderung oder eine Impedanzänderung detektieren. So kann die Wegerfassungseinrichtung kostengünstig implementiert werden.

Die Bremse für ein Fahrzeug, insbesondere für ein Nutzfahrzeug, umfasst eine vorstehend beschriebene Vorrichtung zur Zustandsüberwachung der Bremse und ergänzend oder alternativ eine entsprechende Variante einer vorstehend beschriebenen Wegerfassungseinrichtung.

Das Bremssystem für ein Fahrzeug, insbesondere ein Nutzfahrzeug, umfasst eine erste auf einer Achse angeordnete Bremse, zumindest eine zweite Bremse, die auf der Achse in Bezug zu einer Fahrzeuglängsachse auf einer der ersten Bremse gegenüberliegenden Seite der Achse oder auf einer weiteren Achse angeordnet ist sowie eine Vorrichtung zum Betreiben des Bremssystems wie vorstehend beschrieben, wobei die Vorrichtung zum Betreiben ausgebildet ist, die erste Bremse und die zumindest zweite Bremse anzusteuern.

Ein entsprechendes Fahrzeug umfasst das vorstehend beschriebene Bremssystem. Vorteilhaft werden die Bremsen des Fahrzeugs gleichmäßig abgenutzt und das Fahrzeug weist im Vergleich zu einem Fahrzeug ohne das erfindungsgemäße Bremssystem einen kürzeren Bremsweg auf, was die Verkehrssicherheit erhöht.

Unter den oben beschriebenen Vorrichtungen kann allgemein ein Steuergerät verstanden werden. Ein Steuergerät kann ausgebildet sein, um die Schritte einer Variante eines hier vorgestellten Verfahrens in entsprechenden Einrichtungen auszuführen, durchzuführen bzw. umzusetzen. Unter einem Steuergerät kann ein elektrisches Gerät oder eine elektrische Schaltung, beispielsweise eine integrierte Schaltung verstanden werden. Unter einem Steuergerät kann auch eine Regeleinrichtung, eine ECU oder eine Steuereinrichtung verstanden werden. Das Steuergerät kann ein Teil eines elektronischen Bremssystems sein. Das Steuergerät kann ausgebildet sein, um über geeignete Schnittstellen Signale zu empfangen und auszugeben. Auch durch das Steuergerät kann die der Erfindung zugrunde liegende Idee effizient umgesetzt werden.

Unter einem Steuergerät kann vorliegend ein elektrisches Gerät verstanden werden, das Sensorsignale verarbeitet und in Abhängigkeit der Sensorsignale Steuer- und/oder Datensignale ausgibt. Die Schnittstellen der Steuereinrichtung können hard- und/ oder softwaremäßig ausgebildet sein. Bei einer hardware-mäßigen Ausbildung können die Schnittstellen beispielsweise Teil eines sogenannten System-ASICs sein, der verschiedenste Funktionen der Steuereinrichtung beinhaltet. Die Schnittstellen können jedoch auch als eigene, integrierte Schaltkreise ausgebildet sein oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher gespeichert sein kann und zur Durchführung des Verfahrens nach einer der vorstehend beschriebenen Ausführungsformen verwendet wird, wenn das Computerprogrammprodukt auf einer Steuereinrichtung oder einem Steuergerät ausgeführt wird.

Im Übrigen kann über ein Update einer Software für ein elektronisches Bremssystem (EBS) das erfindungsgemäße Verfahren so aktualisiert werden, dass neue FehlerZustände, wie sie im Feldbetrieb oder im Feldversuch ermittelt werden, hinterlegt werden. So kann der Betriebszustand der Bremsen weiter optimiert werden.

Nachfolgend wird die Erfindung anhand von Ausführungsbeispielen unter Bezug auf die Figuren näher beschrieben. Es zeigt:
- Fig. 1: eine schematische Blockdarstellung eines Ausführungsbeispiels einer Vorrichtung zur Zustandsüberwachung einer Bremse;
- Fig. 2: eine schematische Darstellung eines Fahrzeugs mit einem Bremssystem und einer Vorrichtung zum Betreiben desselben;
- Fig. 3: eine Explosionsdarstellung einer Scheibenbremse;
- Fig. 4 - 7: graphische Darstellungen von Positionssignalen und Drucksignalen unterschiedlicher Bremskonfigurationen gemäß Ausführungsbeispielen der vorliegenden Erfindung;
- Fig. 8: ein Ablaufdiagramm eines Verfahrens zur Zustandsüberwachung einer Bremse;
- Fig. 9: ein Ablaufdiagramm eines Verfahrens zum Betreiben einer Bremse gemäß einem Ausführungsbeispiel der vorliegenden Erfindung; und
- Fig. 10: eine dreidimensionale Darstellung eines rotatorischen Positionssensors.

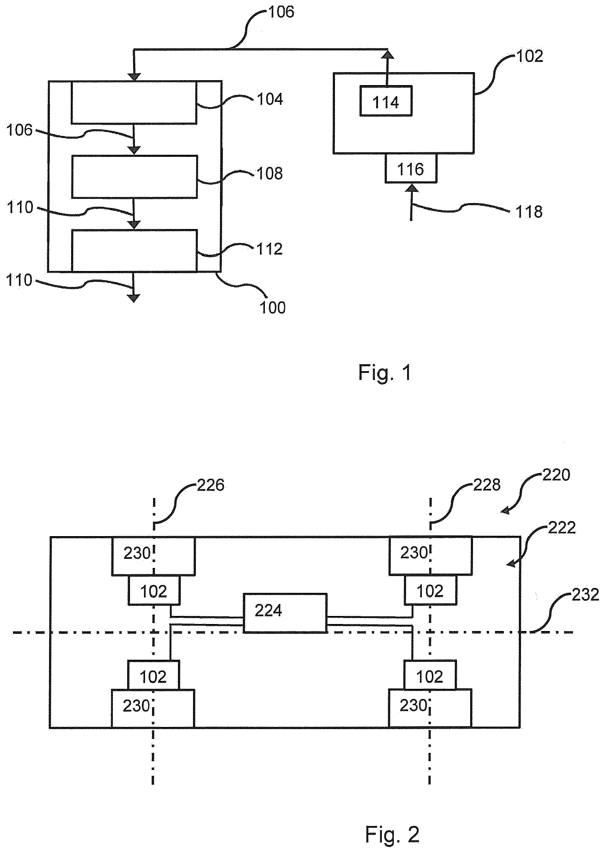

Fig. 1 zeigt eine schematische Blockdarstellung eines Ausführungsbeispiels einer Vorrichtung 100 zur Zustandsüberwachung einer Bremse 102. Die Vorrichtung 100 umfasst eine Schnittstelle 104 zum Einlesen eines Positionssignals 106, eine Einrichtung 108 zum Auswerten des Positionssignals 106, um zumindest einen Zustandsparameter 110 der Bremse 102 zu ermitteln sowie eine Einrichtung 112 zum Bereitstellen des Zustandsparameters 110 der Bremse 102. Das Positionssignal 106 repräsentiert dabei eine durch die lineare Wegerfassungseinrichtung 114 erfasste Position einer Komponente der Bremse 102.

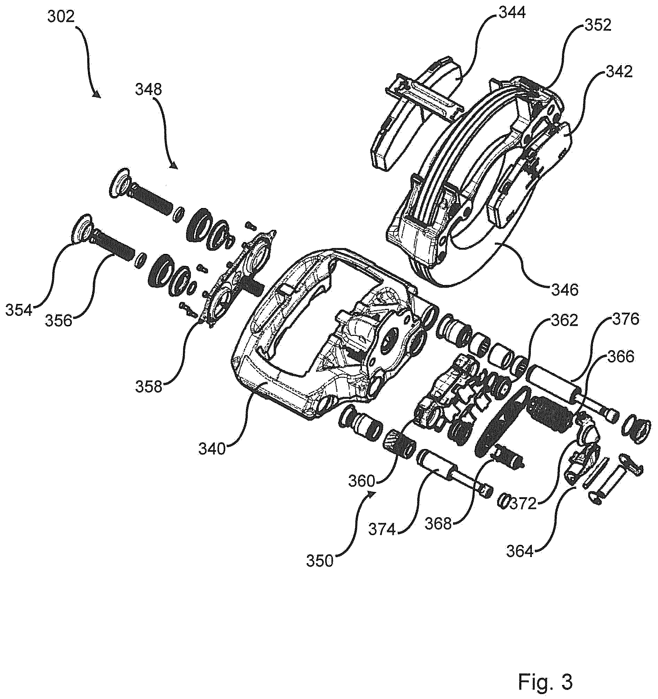

Die Bremse 102 weist eine Wegerfassungseinrichtung 114 auf. In dem gezeigten Ausführungsbeispiel handelt es sich um eine lineare Wegerfassungseinrichtung 114. Bei der Wegerfassungseinrichtung 114 handelt es sich um einen Linearsensor 114, der über ein optisches oder elektrisches Messverfahren eine relative Positionsänderung erfasst und als ein die Positionsänderung repräsentierendes Sensorsignal 106 bereitstellt. Die Positionierung der Wegerfassungseinrichtung 114 wird in Fig. 3 näher erläutert.

Die Bremse 102 weist weiterhin einen Bremszylinder 116 auf, der über ein Drucksignal 118 angesteuert wird. So handelt es sich in einem Ausführungsbeispiel um eine pneumatische Scheibenbremse 102 mit einem entsprechend pneumatisch angesteuerten Bremszylinder 116.

In einem in Fig. 1 nicht gezeigten Ausführungsbeispiel handelt es sich bei der Wegerfassungseinrichtung 114 um einen Rotationssensor 114, der über bekannte geometrische Zusammenhänge ein eine lineare Weginformation repräsentierendes Sensorsignal 106 bereitstellt.

Fig. 2 zeigt eine schematische Darstellung eines Fahrzeugs 220 mit einem Bremssystem 222 und einer Vorrichtung 224 zum Betreiben dieses Bremssystems 222 gemäß einem Ausführungsbeispiel der vorliegenden Erfindung. Das Fahrzeug 220 weist zwei Achsen 226, 228 auf, an denen jeweils auf den gegenüberliegenden Fahrzeugseiten jeweils ein Rad 230 mit einer Betriebsbremse 102 angeordnet ist. In einem Ausführungsbeispiel handelt es sich bei dem Fahrzeug 220 um ein Nutzfahrzeug 220.

Bei der Betriebsbremse 102 kann es sich um ein Ausführungsbeispiel einer in Fig. 1 gezeigten Bremse 102 handeln. Die Vorrichtung 224 ist mit den Bremsen 102 über Steuerleitungen und Sensorleitungen verbunden. Bei den Steuerleitungen kann es sich um eine pneumatische Ansteuerung und entsprechende Druckleitungen handeln. Ebenso können unter den Steuerleitungen auch elektrische Leitungen, über die entsprechende Steuersignale geleitet werden, verstanden werden.

In der Figur ist eine Fahrzeuglängsachse 232 dargestellt, zu der die Räder beziehungsweise Betriebsbremsen 102 im Wesentlichen symmetrisch angeordnet sind. Das dargestellte Bremssystem 222 umfasst zumindest eine erste Betriebsbremse 102 auf einer ersten Achse 226 und eine zweite Betriebsbremse 102 auf der zur Fahrzeuglängsachse 232 gegenüberliegenden Seite auf der ersten Achse 226 oder alternativ auf einer zweiten Achse 228. In dem dargestellten Ausführungsbeispiel umfasst das Bremssystem 222 vier Bremsen 102, wobei immer zwei der Bremsen 102 auf je einer der Achsen 226, 228 auf zur Fahrzeuglängsachse gegenüberliegenden Seiten angeordnet sind. Weiterhin umfasst das Bremssystem 222 die Vorrichtung 224 sowie die Steuer- und Sensorleitungen zwischen der Vorrichtung 224 und den Bremsen 102. Nicht dargestellt sind weitere Komponenten wie Bremszylinder, ABS, EBS, Kompressor, Luftaufbereitung, etc. die im Allgemeinen auch dem Bremssystem zugeordnet werden können.

Fig. 3 zeigt eine Explosionsdarstellung einer Scheibenbremse 302. Bei der Scheibenbremse 302 kann es sich um ein besonderes Ausführungsbeispiel einer in Fig. 1 oder Fig. 2 gezeigten Bremse 102 beziehungsweise Betriebsbremse 102 eines Fahrzeugs handeln. Pneumatisch betätigte Scheibenbremsen 302 weisen in der Regel einen als Schiebesattel 340, Schwenksattel oder Festsattel ausgebildeten Bremssattel 340 auf, in welchem eine Zuspannvorrichtung angeordnet ist, welche dazu dient, Bremsbeläge 342, 344 beidseits einer Bremsscheibe 346 und die Bremsscheibe 346 miteinander in Wirkverbindung zu bringen, um durch Reibung eine Bremswirkung zu erzielen. Bei dem dargestellten Ausführungsbeispiel handelt es sich um eine pneumatisch betätigte Scheibenbremse 302 mit einem Schiebesattel 340.

Je nach Ausführungsbeispiel ist die Zuspanneinrichtung pneumatisch oder elektromotorisch betätigbar. Der aktionsseitige Bremsbelag 342 wird bei Betätigung gegen die fahrzeugseitige Bremsscheibe 346 gepresst. Im weiteren Verlauf des Bremsvorgangs wird der Bremssattel 340, bezogen auf die Bremsscheibe 346, entgegen der Zuspannrichtung des aktionsseitigen Bremsbelages 342 verschoben unter Mitnahme und Anpressen des gegenüberliegenden, reaktionsseitigen Bremsbelages 344 an die andere Seite der Bremsscheibe 346.

Nach einem Lösen der Bremse 102 verbleibt bei der bekannten Scheibenbremse der Bremssattel 340 in dieser Position, in der die Bremsbeläge 342, 344, zumindest aber der reaktionsseitige Bremsbelag 344 zwar drucklos, jedoch schleifend an der Bremsscheibe 346 anliegt. Die dadurch im Fahrbetrieb auftretenden Restschleifmomente der Bremsbeläge können sich insofern nachteilig auswirken als sie zu einem erhöhten Kraftstoffverbrauch führen können ebenso wie zu einer Verringerung der Standzeit der beteiligten Bauteile, nämlich der Bremsscheibe und der Bremsbeläge.

Pneumatisch betätigte Scheibenbremsen 302 gehören mittlerweile zur Standardausrüstung bei schweren Nutzfahrzeugen. Derartige Scheibenbremsen 302 benötigen zur Erzeugung der geforderten Zuspannkraft eine mechanische Übersetzung, da die Kraft der pneumatisch beaufschlagten Bremszylinder wegen des Druckniveaus (derzeit ca. 10 bar) und der limitierten Baugröße der Bremszylinder beschränkt ist. Bei den derzeit bekannten pneumatisch betätigten Scheibenbremsen 302 finden sich Übersetzungsverhältnisse zwischen 10:1 und 20:1.

Die in Fig. 3 dargestellte Scheibenbremse 302 umfasst wie bereits beschrieben eine Zuspanneinrichtung 348, eine Führungseinrichtung 350 sowie eine Belaghalteeinrichtung 352. Dabei umfasst die Zuspanneinrichtung 348 zwei parallel angeordnete Druckstücke 354, diesen zugeordnete Getrieberohre 356, ein Bodenblech 358, den Bremssattel 340 sowie weiterhin eine Brücke 360, Zahnräder 362 sowie einen mit der Brücke 360, insbesondere über Exzenterlager, wirkverbundenen Hebel 364. Weiterhin umfasst die Zuspanneinrichtung 348 einen Nachsteller 366, sowie eine parallel zu diesem angeordnet und über ein Kupplungsstück 368 und eine Synchronisationskette 370 mit dem Nachsteller 366 verbundene Sensoreinrichtung 372.

Die Führungseinrichtung 350 umfasst ein einem Loslager zugeordneten Loslagerholm 374 sowie parallel dazu angeordnet ein einem Festlager zugeordneten Festlagerholm 376. Die Belaghalteeinrichtung 352 umfasst im Wesentlichen einen Belagträger 352.

Eine relative Positionsbestimmung erfolgt mit einer in Fig. 3 nicht dargestellten und in Fig. 1 beschriebenen Wegerfassungseinrichtung 114. Diese erfasst eine Positionsänderung innerhalb der Zuspanneinrichtung 348 zwischen Bodenblech 358, Bremssattel 340 oder Sensoreinrichtung 372 auf der einen Seite und Brücke 360, Kupplungsstück 368 oder Hebel 364 auf der anderen Seite. Alternativ kann die Linearbewegung auch mit einem Rotationssensor an der Drehachse des Hebels 364 oder an einer entsprechenden Position als Auslenkung des Hebels 364 mit einem Linearsensor erfasst werden.

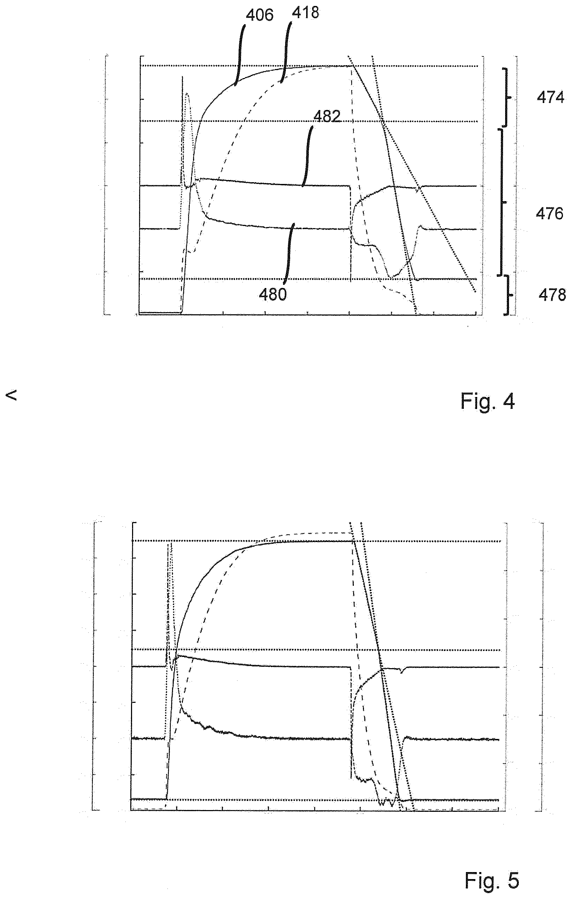

Fig. 4 - 7 zeigen graphische Darstellungen von Positionssignalen und Drucksignalen unterschiedlicher Bremskonfigurationen. Bei dem Positionssignal 406 kann es sich um das in Fig. 1 gezeigte Positionssignal 106 handeln. Bei dem Drucksignal 418 kann es sich um das pneumatische Ansteuersignal des in Fig. 1 gezeigten Bremszylinders 116 handeln. Das Positionssignal 406 zeigt nach dem Lösen der Bremse bei zwei angelegten Tangenten zuerst einen Elastizitätshub 474 und dann an der zweiten Tangente den Lüftspielhub 476. Die Differenz zwischen dem Signalpegel vor der Bremsung und nach der Bremsung signalisiert den Nachstellweg 478, um den das Lüftspiel verringert oder vergrößert wurde. Fig. 4 und Fig. 5 zeigen die Signalverläufe über die Zeit, wobei die Signalverläufe 406, 418 über die Zeit dargestellt sind und der Signalverlauf 480 den Gradienten zu dem Positionssignal und der Signalverlauf 482 den Gradienten des Drucksignals 418 darstellt. Fig. 4 zeigt Signale bei einem zu großen Lüftspiel und Fig. 5 zeigt einen Signalverlauf bei einer Bremsung mit korrekt eingestelltem Lüftspiel.

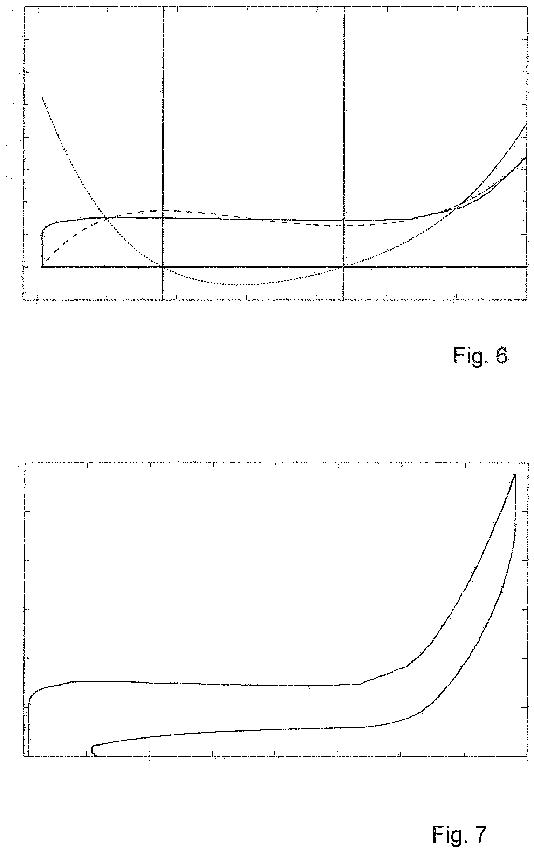

Fig. 6 und Fig. 7 zeigen den Druckverlauf über den Weg als sogenannte Hysterese. Dabei wird deutlich die Elastizität der Bremse in der Steigung der Kurve. Die gestrichelte Linie stellt eine eingepasste Kurve zur gemessenen Kurve dar, die gepunktete Kurve zeigt eine Ableitung der eingepassten Kurve. Das Einpassen der Kurve wird auch als "Curve Fitting" bezeichnet. Die zweite Nullstelle der Ableitung und somit der Wendepunkt der eingepassten Kurve zeigt das Lüftspiel an. In Fig. 6 ist die Betätigung der Bremse gezeigt, in Fig. 7 ist ein kompletter Bremsvorgang mit Betätigung und Lösen der Bremse dargestellt.

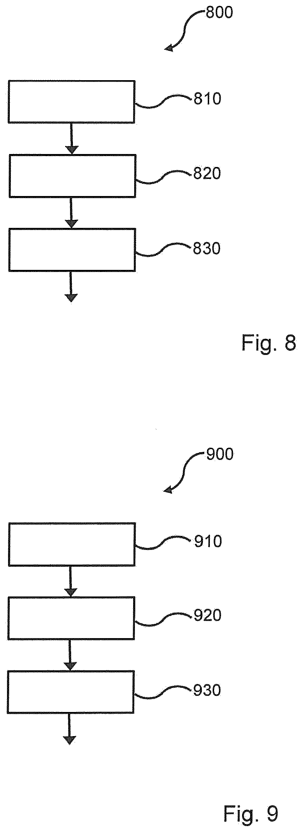

Fig. 8 zeigt ein Ablaufdiagramm eines Verfahrens 800 zur Zustandsüberwachung einer Bremse. Das Verfahren 800 zur Zustandsüberwachung einer Betriebsbremse für ein Fahrzeug umfasst einen Schritt 810 des Einlesens eines Positionssignals, wobei das Positionssignal eine durch die lineare Wegerfassungseinrichtung erfasste Position einer Komponente der Betriebsbremse repräsentiert, insbesondere eine Position über die Zeit oder einen Zeitverlauf repräsentiert, einen Schritt 820 des Auswerten des Positionssignals, um zumindest einen Zustandsparameter der Betriebsbremse zu ermitteln, sowie einen Schritt 830 des Bereitstellens des Zustandsparameters der Betriebsbremse an einer Schnittstelle.

Fig. 9 zeigt ein Ablaufdiagramm eines Verfahrens 900 zum Betreiben einer Bremse gemäß einem Ausführungsbeispiel der vorliegenden Erfindung. Das Verfahren 900 zum Betreiben eines Bremssystems eines Fahrzeugs, insbesondere eines Nutzfahrzeugs, wobei das Bremssystem zumindest eine Betriebsbremse und eine Vorrichtung zur Zustandsüberwachung der Betriebsbremse umfasst, umfasst einen Schritt 910 des Einlesens eines Zustandsparameters der Betriebsbremse von einer Schnittstelle der Vorrichtung zur Zustandsüberwachung der Betriebsbremse, einen Schritt 920 des Auswertens des Zustandsparameters, um ein Bremsansteuerungssignal unter Verwendung des ausgewerteten Zustandsparameters und eines Bremsanforderungssignals zu ermitteln, um eine Bremsbereitschaft und/oder einen gewünschten Zustand der Betriebsbremse einzustellen, sowie einen Schritt 930 des Bereitstellens des Bremsansteuerungssignals der Betriebsbremse an einer Schnittstelle, um die Betriebsbremse anzusteuern.

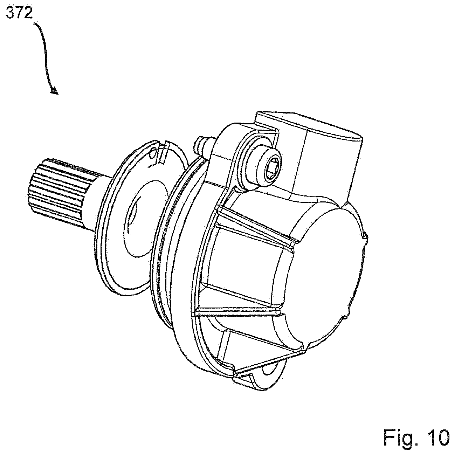

Fig. 10 zeigt eine dreidimensionale Darstellung eines rotatorischen Positionssensors als Sensoreinrichtung 372.

### Bezugszeichen

- 100: Vorrichtung
- 102: Bremse, Betriebsbremse
- 104: Schnittstelle zum Einlesen
- 106: Positionssignal
- 108: Einrichtung zum Auswerten
- 110: Zustandsparameter
- 112: Einrichtung zum Bereitstellen
- 114: Wegerfassungseinrichtung
- 116: Bremszylinder
- 118: Drucksignal

- 220: Fahrzeug
- 222: Bremssystem
- 224: Vorrichtung zum Betreiben
- 226, 228: Achse(n)
- 230: Rad
- 232: Fahrzeuglängsachse

- 302: Scheibenbremse
- 340: Schiebesattel
- 342: innerer Belag, aktionsseitiger Belag
- 344: äußerer Belag, reaktionsseitiger Belag
- 346: Bremsscheibe
- 348: Zuspanneinrichtung
- 350: Führungseinrichtung
- 352: Belaghalteeinrichtung, Träger
- 354: Druckstück
- 356: Getrieberohr
- 358: Bodenblech
- 360: Brücke
- 362: Zahnrad
- 364: Hebel
- 366: Nachsteller
- 368: Kupplungsstück
- 370: Synchronisationskette
- 372: Sensoreinrichtung (Wegerfassungseinrichtung, Potentiometer)

- 406: Positionssignal
- 418: Drucksignal
- 474: Elastizitätshub
- 476: Lüftspielhub, Lüftspiel
- 478: Nachstellweg
- 480: Gradient des Positionssignals 406
- 482: Gradient des Drucksignals 418

- 800: Verfahren
- 810: Schritt des Einlesens
- 820: Schritt des Auswertens
- 830: Schritt des Bereitstellens

- 900: Verfahren
- 910: Schritt des Einlesens
- 920: Schritt des Auswertens
- 930: Schritt des Bereitstellens

## Patentansprüche

1. Verfahren (900) zum Betreiben eines Bremssystems eines Fahrzeugs, insbesondere eines Nutzfahrzeugs, wobei das Bremssystem (222) zumindest eine Betriebsbremse (102; 302) und eine Vorrichtung (100) zur Zustandsüberwachung der Betriebsbremse (102; 302) umfasst, wobei das Verfahren (900) die folgenden Schritte aufweist:
a) Einlesen (910) eines Zustandsparameters (110) der Betriebsbremse (102; 302) von einer Schnittstelle (112) der Vorrichtung (100) zur Zustandsüberwachung (100) der Betriebsbremse (102; 302);
b) Auswerten (920) des Zustandsparameters (110), um ein Bremsansteuerungssignal (118) unter Verwendung des ausgewerteten Zustandsparameters (110) und eines Bremsanforderungssignals zu ermitteln, um eine Bremsbereitschaft und/oder einen gewünschten Zustand der Betriebsbremse (102; 302) einzustellen; und
c) Bereitstellen (930) des Bremsansteuerungssignals der Betriebsbremse (102; 302) an einer Schnittstelle, um die Betriebsbremse (102; 302) anzusteuern,
wobei das Ermitteln des einzulesenden Zustandsparameters die folgenden Verfahrensschritte umfasst:
aa) Einlesen (810) eines Positionssignals (106), wobei das Positionssignal (106) eine durch eine lineare Wegerfassungseinrichtung erfasste Position einer Komponente der Betriebsbremse (102; 302) repräsentiert, insbesondere eine Position über die Zeit oder einen Zeitverlauf repräsentiert, wobei zusätzlich im Schritt des Einlesens ein Drucksignal und ergänzend oder alternativ ein Steuersignal und ergänzend oder alternativ ein Belagverschleißsignal eingelesen wird,
bb) Auswerten (820) des Positionssignals (106), um zumindest einen Zustandsparameter (110) der Betriebsbremse (102; 302) zu ermitteln, wobei im Schritt des Auswertens der Zustandsparameter unter Verwendung des Drucksignals und ergänzend oder alternativ des Steuersignals und ergänzend oder alternativ des Belagverschleißsignals bestimmt wird; und
cc) Bereitstellen (830) des Zustandsparameters (110) der Betriebsbremse (102; 302) an einer Schnittstelle.
wobei vor dem Schritt (910) des Einlesens zumindest ein Randparameter überprüft wird, und die weiteren Schritte des Verfahrens (900) nur ausgeführt werden, wenn der zumindest eine Randparameter innerhalb eines vorgegebenen Sollbereichs liegt und im Schritt (920) des Auswertens das Bremsansteuerungssignal derart ermittelt wird, dass eine Mehrzahl von angesteuerten Betriebsbremsen (102; 302) des Fahrzeugs (220) einen harmonisierten Verschleiß aufweisen.

2. Verfahren nach Anspruch 1, **dadurch gekennzeichnet, dass** im Schritt (830) des Bereitstellens eine Regelgröße anstelle des Zustandsparameters (110) oder zusätzlich zum Zustandsparameter (110) bereitgestellt wird, wobei die Regelgröße unter Verwendung des Zustandsparameters (110) bestimmt wird.

3. Verfahren nach Anspruch 2, **dadurch gekennzeichnet, dass** die Regelgröße ein Steuersignal (118) für einen Ansprechdruck und/oder einen Anlegedruck für eine Reibeinrichtung (342, 344) der Betriebsbremse (102; 302) repräsentiert.

4. Verfahren nach Anspruch 2 oder 3, **dadurch gekennzeichnet, dass** die Regelgröße ein Signal zum Ansteuern eines Aktors der Betriebsbremse (102; 302) repräsentiert, insbesondere wobei der Aktor ein bidirektionaler Nachsteller (366), insbesondere ein elektrischer Nachsteller (366), und/oder ein Bremszylinder (116) und/oder eine Zusatzkomponente des Bremszylinders (116) der Betriebsbremse (102; 302) ist.

5. Verfahren nach einem der vorangegangenen Ansprüche, **dadurch gekennzeichnet, dass** im Schritt (820) des Auswertens der Zustandsparameter (110) einen Belagverschleiß und/oder ein Belagwachsen und/oder ein Lüftspiel und/oder eine Bremsbereitschaft und/oder eine Fehlerinformation der Betriebsbremse (102; 302) repräsentiert.

6. Verfahren nach einem der vorstehenden Ansprüche, **dadurch gekennzeichnet, dass** im Schritt (810) des Einlesens das Belagverschleißsignal durch das Positionssignal (106) plausibilisiert wird.

## Claims

1. Method (900) for operating a brake system of a vehicle, in particular a utility vehicle, wherein the brake system (222) comprises at least one service brake (102; 302) and a device (100) for monitoring the condition of the service brake (102; 302), such that the method comprises the following steps:
a) reading in of a condition parameter (110) of the service brake (102; 302) by an interface (112) of the device (100) for monitoring (100) the condition of the service brake (102; 302);
b) evaluation (920) of the condition parameter (110) in order to determine a brake actuation signal (118) using the evaluated condition parameter (110) and a braking demand signal, in order to determine a brake readiness and/or set a desired condition of the service brake (102; 302); and
c) transmission (930) of the brake actuation signal of the service brake (102; 302) to an interface, in order actuate the service brake (102; 302),
wherein the determination of the condition parameter to be read in comprises the following process steps:
aa) reading in (810) of a position signal (106), such that the position signal (106) represents a position of a component of the service brake (102; 302) detected by a path detection device, in particular representing a position as a function of time or time profile, and furthermore, in the reading-in step a pressure signal and additionally or alternatively a control signal and additionally or alternatively a brake-pad wear signal is read in,
bb) evaluation (820) of the position signal (106) in order to determine at least one condition parameter (110) of the service brake (102; 302), wherein, in the evaluation step the condition parameter is determined using the pressure signal and additionally or alternatively the control signal and additionally or alternatively the brake-pad wear signal; and
cc) the condition parameter (110) of the service brake (102; 302) is transmitted (830) to an interface,
and before the reading-in step (910) at least one boundary parameter is checked and the further process step (900) is only carried out if the at least one boundary parameter is within a specified set range, and in the evaluation step (920) the brake actuation signal is determined in such manner that a majority of actuated service brakes (102; 302) of the vehicle (220) show a harmonised amount of wear.

2. Method according to Claim 1, **characterised in that** in the transmission step (830) a control variable is transmitted instead of or in addition to the condition parameter (110), such that the said control variable is determined using the condition parameter (110).

3. Method according to Claim 2, **characterised in that** the control variable represents a control signal (118) for a response pressure and/or an application pressure for a friction device (342, 344) of the service brake (102; 302).

4. Method according to Claims 2 or 3, **characterised in that** the control variable represents a signal for actuating an actor of the service brake (102; 302), in particular such that the said actor is a bidirectional adjustment device (366), especially an electric adjustment device (366) and/or a brake cylinder (116) and/or an additional component of the brake cylinder (116) of the service brake (102; 302).

5. Method according to any of the preceding claims, **characterised in that** in the evaluation step (820) the condition parameter (110) represents a brake-pad wear and/or a brake-pad growth and/or an air-gap and/or a brake readiness level and/or a misinformation regarding the service brake (102; 302).

6. Method according to any of the preceding claims, **characterised in that** in the reading-in step (810), the plausibility of the brake-pad wear signal is checked with reference to the position signal (106).

## Revendications

1. Procédé (900) pour faire fonctionner un système de frein d'un véhicule, en particulier d'un véhicule utilitaire, le système (222) de frein comprenant au moins un frein (102, 302) de service et un système (100) de contrôle de l'état du frein (102, 302) de service, dans lequel le procédé (900) a les stades suivants :
a) lecture (910) d'un paramètre (110) d'état du frein (102, 302) de service par une interface (112) du système (100) de contrôle (100) du frein (102, 302) de service ;
b) exploitation (920) du paramètre (110) d'état pour déterminer un signal (118) de commande du frein, en utilisant le paramètre (110) d'état exploité et un signal de demande de frein, afin d'établir une disponibilité du frein et/ou un état souhaité du frein (102, 302) de service ; et
c) mise à disposition (930) du signal de commande du frein (102, 302) de service à une interface pour commander le frein (102, 302) de service,
dans le quel la détermination du paramètre d'état comprend les stades de procédé suivants :
aa) lecture (810) d'un signal (106) de position, le signal (106) de position représentant une position, relevée par un dispositif de relevé de trajet linéaire, d'un élément (102, 302) de service, en représentant notamment une position en fonction du temps ou une courbe en fonction du temps, dans lequel en plus on lit dans le stade de la lecture un signal de pression et, en complément ou en variante, un signal de commande et, en complément ou en variante, un signal d'usure de garniture,
bb) exploitation (820) du signal (106) de position pour déterminer au moins un paramètre (110) d'état du frein (102, 302) de service, dans lequel, dans le stade de l'exploitation, on détermine le paramètre d'état, en utilisant le signal de pression et, en complément ou en variante, un signal de commande et, en complément ou en variante, le signal d'usure de garniture ; et
cc) mise à disposition (830) du paramètre (110) d'état du frein (102, 302) de service à une interface,
dans lequel avant le stade (910) de la lecture, on contrôle au moins un paramètre marginal et on n'effectue les autres stades du procédé (900) que si le au moins un paramètre marginal se trouve dans une place de consigne donnée à l'avance
et, dans le stade (920) de l'évaluation, on détermine le signal de commande du frein de manière à harmoniser l'usure d'une pluralité de freins (102, 302) de service, qui sont commandés.

2. Procédé suivant la revendication 1, **caractérisé en ce que**, dans le stade (830) de la mise à disposition, on met à disposition une grandeur de réglage au lieu du paramètre (110) d'état ou en plus du paramètre (110) d'état, la grandeur de réglage étant déterminée en utilisant le paramètre (110) d'état.

3. Procédé suivant la revendication 2, **caractérisé en ce que** la grandeur de réglage représente un signal (118) de commande pour une pression de réaction et/ou une pression d'application d'un dispositif (342, 344) de friction du frein (102, 302) de service.

4. Procédé suivant la revendication 2 ou 3, **caractérisé en ce que** la grandeur de réglage représente un signal de commande d'un actionneur du frein (102, 302) de service, dans lequel en particulier l'actionneur est un régleur (366) bi-directionnel, en particulier un régleur (166) électrique et/ou un cylindre (116) de frein et/ou un élément supplémentaire du cylindre (116) du frein (102, 302) de service.

5. Procédé suivant l'une des revendications précédentes, **caractérisé en ce que**, dans le stade (820) de l'exploitation, le paramètre (110) d'état représente une usure de garniture et/ou une croissance de garniture et/ou un jeu entre garnitures et/ou une disponibilité du frein et/ou une information de défaut du frein (102, 302) de service.

6. Procédé suivant l'une des revendications précédentes, **caractérisé en ce que**, dans le stade (810) de la lecture, le signal de garniture de frein est rendu vraisemblable par le signal (106) de position.
